# FASCICULE DE BREVET EUROPEEN

(11) **EP 2 874 833 B1**
(45) Date de publication et mention de la délivrance du brevet: **11.05.2016**
(21) Numéro de dépôt: 13739756.8
(22) Date de dépôt: 01.07.2013
(51) Int. Cl.: B60H 1/00, B60H 1/32

(54) **DISPOSITIF D'ESTIMATION INDIRECTE DE LA TEMPÉRATURE DANS UNE ENCEINTE ALIMENTÉE EN AIR TRAITÉ PAR UNE INSTALLATION DE CHAUFFAGE/CLIMATISATION**
VORRICHTUNG ZUR INDIREKTEN ERMITTLUNG DER TEMPERATUR IN EINEM GEHÄUSE MIT ZUFUHR VON DURCH EINE HEIZUNGS-/KLIMAANLAGE BEHANDELTER LUFT
DEVICE FOR INDIRECTLY ESTIMATING THE TEMPERATURE INSIDE AN ENCLOSURE FED WITH AIR TREATED BY A HEATING/AIR CONDITIONING INSTALLATION

(30) Priorité: 23.07.2012 FR 1257137
(43) Date de publication de la demande: 27.05.2015
(73) Titulaire: Peugeot Citroën Automobiles SA, 78140 Vélizy Villacoublay (FR)
(72) Inventeur: TROUILLARD, Arnaud, F-92170 Vanves (FR); BRUNIQUEL, Guillaume, F-75013 Paris (FR)
(86) Numéro de dépôt international: PCT/FR2013/051533
(87) Numéro de publication internationale: WO 2014/016485

(56) Documents cités:
- EP-A1- 0 612 964
- EP-A1- 1 757 476
- EP-A1- 2 221 198
- EP-A2- 1 116 612

## Description

L'invention concerne les installations de chauffage/climatisation qui sont destinées à alimenter en air traité une enceinte et qui comprennent un volet d'alimentation destiné à les alimenter en air extérieur et/ou en air recyclé (ou recirculé) issu de cette enceinte.

On notera que l'invention concerne tout système comprenant au moins une enceinte devant être alimentée en air traité par une installation de chauffage/climatisation. Par conséquent, elle concerne au moins les véhicules, éventuellement de type automobile, et les bâtiments.

Comme le sait l'homme de l'art, certaines installations de chauffage/ climatisation comprennent :
- un volet d'alimentation propre à contrôler leur alimentation en air extérieur et/ou en air recyclé issu de l'enceinte associée,
- des moyens de chauffage propres à réchauffer de l'air pour alimenter une chambre de mixage destinée à alimenter en air traité des bouches de distribution de l'enceinte associée,
- un volet de mixage propre à contrôler la répartition de l'air fourni par le volet d'alimentation entre la chambre de mixage et les moyens de chauffage, et
- un capteur de température propre à mesurer la (seconde) température de l'air en amont des moyens de chauffage.

Le conditionnement thermique d'une enceinte lorsque l'air extérieur est froid, voire très froid, est une fonction qui est habituellement appréciée par les personnes qui fréquentent cette enceinte. C'est tout particulièrement le cas lorsque le conditionnement thermique consiste en un préchauffage permettant aux futurs passagers d'un véhicule de disposer d'un habitacle préchauffé au moment où ils entreront dans ce dernier, c'est-à-dire avant que le groupe moto propulseur du véhicule n'ait été mis en fonctionnement. Cette fonction de préchauffage peut résulter de la programmation d'une heure de prise en main du véhicule, ou d'une demande déclenchée par l'actionnement d'une télécommande, ou encore d'une déduction faite par le calculateur qui gère l'installation, par apprentissage des habitudes du conducteur du véhicule.

Comme le sait l'homme de l'art, pour que le conditionnement thermique précité soit réalisé de façon efficace il faut que le calculateur précité dispose de la valeur précise de la température régnant dans l'enceinte (par exemple l'habitacle). Cela lui permet en effet non seulement de déterminer le nombre minimal de calories qui doivent être diffusées dans l'habitacle pour offrir un confort acceptable, sans que cela n'induise une surchauffe de l'habitacle synonyme d'une dépense d'énergie inutile, mais également de disposer, lors des phases d'initialisation effectuées au démarrage du véhicule, d'un historique de la température dans l'habitacle, lorsque l'installation dispose d'un mode de fonctionnement automatique.

La détermination de la (première) température dans une enceinte peut se faire de différentes façons.

Une première façon consiste à utiliser un capteur de température implanté dans l'enceinte pour effectuer des mesures directes sur l'air qui est contenu dans cette enceinte.

Une seconde façon consiste à effectuer une estimation via un bilan énergétique réalisé à partir de données et de mesures de variables effectuées par des capteurs externes à l'enceinte (comme par exemple la température extérieure, la température de l'air traité qui sort de l'installation, et la puissance solaire reçue par l'enceinte).

La mesure directe de la température dans l'enceinte présente au moins deux inconvénients : elle nécessite un capteur de température assez onéreux (notamment du fait qu'il doit être associé à un système de ventilation pour être correctement irrigué), et elle nécessite un lieu d'implantation du capteur suffisamment représentatif de l'enceinte, ce qui peut nuire au style intérieur de cette enceinte.

La mesure indirecte par estimation via un bilan énergétique nécessite l'accès à de nombreuses informations, ce qui n'est pas toujours possible ou bien s'avère délicat, notamment dans le cas de la température de l'air traité sortant de l'installation. Cette dernière température nécessite en effet un capteur indiquant soit directement la température de l'air traité sortant, soit la quantité d'énergie qui a été communiquée à cet air traité par les moyens de chauffage. En outre, la disponibilité des nombreuses informations, nécessaires à la réalisation du bilan énergétique, nécessite que de nombreux calculateurs soient actifs, ce qui entraîne une consommation d'énergie électrique et impose que ces calculateurs soient capables de fonctionner pendant des durées plus longues.

Le document EP 1116612 A2, qui est considéré comme l'art antérieur le plus proche, divulgue un dispositif, destiné à estimer une première température dans une enceinte alimentée en air traité par une installation de chauffage/climatisation du type de celle présentée dans la partie introductive, et comprenant des moyens de contrôle agencés pour ordonner les placements du volet d'alimentation et du volet de mixage dans des positions dans lesquelles ils alimentent respectivement l'installation en air exclusivement recyclé et les moyens de chauffage avec l'intégralité de cet air recyclé, puis pour estimer la première température à partir de la seconde température mesurée consécutivement à ces placements.

On dispose ainsi, par mesure indirecte, d'une estimée assez fiable de la première température de l'air dans l'enceinte, sans utiliser de capteur additionnel dans l'habitacle et sans avoir à effectuer un bilan énergétique.

L'invention a pour but d'améliorer un tel dispositif. Ce but est atteint, conformément à l'invention, par un dispositif suivant la revendication 1.

Le dispositif d'estimation selon l'invention peut comporter d'autres caractéristiques qui peuvent être prises séparément ou en combinaison, et notamment :
- dans un premier mode de réalisation, ses moyens de contrôle peuvent être agencés pour assimiler la première température à la seconde température qui a été mesurée consécutivement aux placements ;
- dans un second mode de réalisation, ses moyens de contrôle peuvent être agencés pour estimer la première température en effectuant la soustraction entre la seconde température, qui a été mesurée consécutivement aux placements, et une valeur choisie ;
   ➢ ses moyens de contrôle peuvent être agencés pour choisir la valeur en fonction d'une troisième température de l'air qui règne à l'extérieur de l'enceinte ;
   ➢ en variante, ses moyens de contrôle peuvent être agencés pour utiliser une valeur choisie qui est prédéfinie ;
- ses moyens de contrôle peuvent être agencés pour ordonner des placements de volets d'alimentation de l'installation dans des positions respectives permettant l'alimentation exclusive de bouches de distribution dédiées au dégivrage.

L'invention propose également un calculateur, destiné à équiper une installation de chauffage/climatisation devant alimenter une enceinte en air traité, et comprenant un dispositif d'estimation du type de celui présenté ci-avant.

L'invention propose également une installation de chauffage/ climatisation propre à alimenter en air traité une enceinte et comprenant :
- un volet d'alimentation propre à contrôler son alimentation en air extérieur et/ou air recyclé issu de l'enceinte,
- des moyens de chauffage propres à réchauffer de l'air pour alimenter une chambre de mixage destinée à alimenter en air traité des bouches de distribution de l'enceinte,
- un volet de mixage propre à contrôler la répartition de l'air fourni par son volet d'alimentation entre sa chambre de mixage et ses moyens de chauffage,
- un capteur de température propre à mesurer une seconde température de l'air en amont de ses moyens de chauffage, et
- un calculateur du type de celui présenté ci-avant.

Cette installation peut également comprendre un évaporateur installé entre, d'une part, son volet d'alimentation, et, d'autre part, ses moyens de chauffage et son volet de mixage. Dans ce cas, son capteur de température peut être propre à mesurer la seconde température de l'air en sortie de son évaporateur.

L'invention propose également un véhicule, éventuellement de type automobile, et comprenant une installation de chauffage/climatisation du type de celle présentée ci-avant.

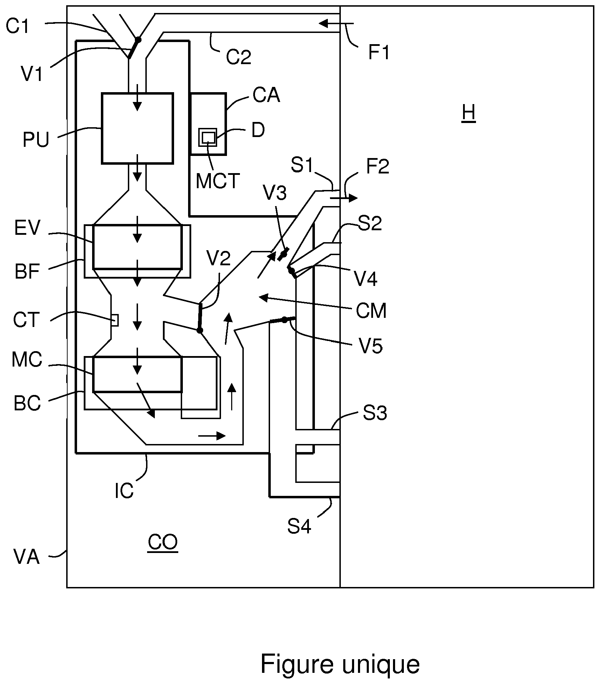

D'autres caractéristiques et avantages de l'invention apparaîtront à l'examen de la description détaillée ci-après, et du dessin annexé, sur lequel l'unique figure illustre schématiquement une installation de chauffage/ climatisation de véhicule automobile couplée à un calculateur comportant un exemple de réalisation d'un dispositif d'estimation selon l'invention.

L'invention a pour but de proposer un dispositif d'estimation D destiné à fournir des estimations de température à un calculateur CA gérant une installation de chauffage/climatisation IC d'un système VA comprenant au moins une enceinte H.

Dans ce qui suit, on considère, à titre d'exemple non limitatif, que l'installation de chauffage/climatisation IC fait partie d'un système VA agencé sous la forme d'un véhicule automobile, comme par exemple une voiture. L'enceinte du véhicule VA est donc son habitacle H. Mais l'invention n'est pas limitée à ce type de système. Elle concerne en effet tout type de véhicule terrestre, maritime (ou fluvial), ou aérien, et tout type de bâtiment, dès lors qu'il comprend au moins une enceinte destinée à être alimentée en air traité par une installation de chauffage/climatisation.

On a schématiquement et fonctionnellement représenté sur l'unique figure une installation de chauffage/climatisation IC, ici installée dans un compartiment moteur CO d'un véhicule VA.

Comme illustré, cette installation (de chauffage/climatisation) IC comprend au moins un pulseur (ou groupe moto-ventilateur (ou GMV)) PU, une boucle chaude (ou boucle de chauffage) BC, un volet d'alimentation V1, un volet de mixage VM et un capteur de température CT.

On notera que dans l'exemple non limitatif illustré, l'installation IC comprend également une boucle froide (ou boucle de climatisation) BF. Cela résulte du fait qu'elle est ici adaptée au chauffage et à la climatisation (refroidissement) de l'habitacle H. Mais cela n'est pas obligatoire. En effet, elle pourrait n'être adaptée qu'au seul chauffage d'une enceinte.

Le pulseur PU est alimenté en air extérieur et/ou en air recyclé (ou recirculé) par le volet d'alimentation (ou d'entrée d'air) V1. L'air extérieur est issu d'un premier conduit C1 et l'air recyclé est issu de l'habitacle H via un second conduit C2 (flèche F1). Le débit d'air fourni par le pulseur PU dépend du niveau de puissance qui a été automatiquement calculé par le calculateur CA ou bien choisi (et éventuellement programmé) par un passager du véhicule VA au moyen d'un organe de commande qui est installé dans l'habitacle H, généralement dans la planche de bord.

La position du volet d'alimentation V1, et donc les proportions d'air extérieur et d'air recyclé qui alimentent l'installation IC (et ici son pulseur PU), est/sont contrôlé(e)s par un calculateur CA sur lequel on reviendra plus loin.

La boucle froide BF (optionnelle) est alimentée en air par le pulseur PU. Elle comporte notamment un évaporateur EV (traversé par l'air qui est issu du pulseur PU), ainsi qu'un compresseur, un condenseur et un circuit dans lequel circule un fluide frigorigène et qui est couplé à l'évaporateur EV, au compresseur et au condenseur. Ce fluide frigorigène, qui circule en circuit fermé dans le circuit dans différentes phases, est, par exemple, un HFC (ou un autre réfrigérant fluoré) ou du dioxyde de carbone.

La sortie de l'évaporateur EV est couplée à un conduit qui alimente, d'une part, une chambre de mixage CM présentant une première entrée dont l'accès est contrôlé par le volet de mixage VM, et, d'autre part, la boucle chaude BC dont la sortie alimente une seconde entrée de la chambre de mixage CM.

La boucle chaude BC est destinée à chauffer l'air qui est issu (ici) de l'évaporateur EV et qui est destiné à l'habitacle H du véhicule VA, éventuellement après un mélange avec de l'air moins chaud présent dans la chambre de mixage CM. Elle comprend des moyens de chauffage MC comportant, par exemple, un aérotherme, comme par exemple un échangeur de chaleur (dans lequel circule un liquide qui est éventuellement chauffé par des résistances électriques de chauffage (par exemple de type CTP haute tension), ou par un réchauffeur à combustion thermique), et/ou un radiateur électrique, par exemple constitué de résistances électriques de chauffage (par exemple de type CTP haute tension).

Ces moyens de chauffage MC sont chargés, lorsqu'ils fonctionnent, de réchauffer l'air qui les traverse et qui est issu (ici) de l'évaporateur EV, afin de délivrer de l'air réchauffé sur la sortie qui alimente la seconde entrée de la chambre de mixage CM.

La chambre de mixage CM est connectée à des conduits qui sont, ici, destinés à alimenter des bouches de distribution placées dans l'habitacle H du véhicule VA et dédiées au dégivrage S1, à l'aération centrale S2, aux pieds avant S3 et aux pieds arrière S4. L'accès à ces conduits est contrôlé par des volets d'admission V3 à V5. On notera que le volet d'admission V5 contrôle ici l'accès à un conduit qui alimente les bouches de pieds avant S3 et de pieds arrière S4. Mais on pourrait prévoir deux volets d'admission pour contrôler les accès respectivement aux bouches de pieds avant S3 et bouches de pieds arrière S4. On notera que ces différents volets d'admission V3 à V5 sont généralement couplés entre eux par une cinématique qui est par exemple mue par un ou deux micromoteurs.

Les positions respectives des volets d'admission V3 à V5 dépendent des bouches de distribution au niveau desquelles un passager du véhicule VA souhaite que l'air traité, issu de l'installation IC, soit délivré. Ces bouches de distribution peuvent être choisies par le passager au moyen d'au moins un organe de commande installé dans l'habitacle H, généralement dans la planche de bord.

Le volet de mixage VM est destiné à contrôler la répartition de l'air, qui est fourni par le volet d'alimentation V1 (et qui a ici traversé l'évaporateur EV), entre la chambre de mixage CM et les moyens de chauffage MC. Il permet donc de mélanger (ou mixer) de façon contrôlée une partie de l'air qui a traversé l'éventuelle boucle froide BF et l'air qui a traversé la boucle chaude BC. Sa position dépend du mode de fonctionnement de l'installation IC qui a été choisi (et éventuellement programmé) par un passager du véhicule VA au moyen d'un organe de commande installé dans l'habitacle H, généralement dans la planche de bord.

Le capteur de température CT est propre à mesurer une seconde température de l'air qui est présent en amont des moyens de chauffage MC. La seconde température est un paramètre qui est utilisé par le calculateur CA pour contrôler la température de l'air traité devant alimenter l'habitacle H. On notera que dans l'exemple non limitatif illustré sur l'unique figure, le capteur CT est installé en sortie de l'évaporateur EV et donc en amont des moyens de chauffage MC. Mais il pourrait être installé en sortie du pulseur PU.

Le fonctionnement de l'installation IC, et en particulier de son pulseur PU, de son éventuelle boucle froide BF, de sa boucle chaude BC, de son volet d'alimentation V1, de son volet de mixage V2 et de ses volets d'admission V3 à V5, est contrôlé par le calculateur CA.

On notera que l'installation IC pourrait présenter une architecture sensiblement différente, notamment lorsqu'elle fonctionne en tant que pompe à chaleur réversible.

Le dispositif d'estimation D, selon l'invention est destiné à estimer une première température régnant dans l'habitacle H de façon indirecte, c'est-à-dire sans capteur de température dans l'habitacle H.

Dans l'exemple non limitatif illustré sur l'unique figure, le dispositif d'estimation D fait partie du calculateur CA. Mais cela n'est pas obligatoire. Il pourrait en effet s'agir d'un équipement qui est couplé au calculateur CA, directement ou indirectement. Il pourrait également être implanté dans un autre calculateur que celui qui gère l'installation CA. Par conséquent, le dispositif d'estimation D peut être réalisé sous la forme de modules logiciels (ou informatiques ou encore « software »), ou bien d'une combinaison de circuits électroniques (ou « hardware ») et de modules logiciels.

Comme illustré, le dispositif d'estimation D comprend au moins des moyens de contrôle MC agencés pour ordonner, d'une part, le placement du volet d'alimentation V1 dans une position dans laquelle il alimente l'installation IC en air exclusivement recyclé, et, d'autre part, le placement du volet de mixage V2 dans une position dans laquelle il alimente les moyens de chauffage MC avec l'intégralité de cet air recyclé (ici issu de l'évaporateur EV). Ils (MC) sont également agencés, une fois qu'au moins ces placements ont été réalisés, pour estimer la première température (de l'air dans l'habitacle H) à partir de la seconde température qui a été mesurée par le capteur CT consécutivement à ces placements.

On comprendra que lorsque l'installation IC fonctionne en mode d'air recyclé, que l'évaporateur EC ne fonctionne pas et que l'intégralité de l'air recyclé alimente les moyens de chauffage MC, la seconde température de l'air recyclé qui va alimenter ces derniers (MC) est similaire à la première température que présente l'air dans l'habitacle H.

On entend ici par « similaire », le fait d'être égal, ou quasiment égal, ou encore égal à une valeur près.

Au moins deux modes d'estimation de la première température peuvent être envisagés.

Dans un premier mode, les moyens de contrôle MCT sont agencés pour assimiler la première température à la seconde température qui a été mesurée consécutivement aux placements du volet d'alimentation V1 dans la position « air recyclé » et du volet de mixage V2 dans la position « tout chauffage ». On comprendra que dans ce cas on considère que la première température est égale à la seconde température.

Dans un second mode, les moyens de contrôle MCT sont agencés pour estimer la première température en effectuant la soustraction entre la seconde température, qui a été mesurée consécutivement aux placements du volet d'alimentation V1 dans la position air recyclé et du volet de mixage V2 dans la position tout chauffage, et une valeur choisie. On comprendra que dans ce cas on considère que la première température est égale à la seconde température moins la valeur choisie. On considère en effet ici que la température de l'air recyclé varie entre le moment où il quitte l'habitacle H par aspiration (flèche F1) et le moment où il se retrouve dans la zone du capteur CT (cette variation étant égale à la valeur choisie).

Cette valeur peut être choisie d'au moins deux façons.

Dans une première façon, les moyens de contrôle MCT sont agencés pour choisir la valeur précitée en fonction d'une troisième température que présente l'air qui est situé à l'extérieur de l'habitacle H. On considère en effet ici que la température de l'air recyclé va varier en fonction de la température de l'air extérieur. Cette troisième température est mesurée par un capteur non représenté que comprend habituellement le véhicule VA, et utilisée par le calculateur CA pour faire converger la première température vers une consigne définie par le conducteur du véhicule VA.

Dans une seconde façon, les moyens de contrôle MCT sont agencés pour utiliser une valeur choisie qui a été prédéfinie en usine lors de tests. On considère en effet ici que la température de l'air recyclé varie de façon quasiment constante, indépendamment de la température de l'air extérieur.

On notera que les moyens de contrôle MCT sont préférentiellement agencés pour estimer la première température pendant chaque phase de préchauffage de l'habitacle H, c'est-à-dire lorsque le véhicule VA est inoccupé et que l'on veut rendre plus agréable l'air ambiant dans l'habitacle H pour ses futurs passagers. Cette phase de préchauffage peut être déclenchée par le calculateur CA en fonction d'une heure programmée d'arrivée de passager(s) dans l'habitacle H, ou d'une demande issue d'une télécommande. Cette heure peut être programmée par le conducteur, ou bien déduite par le calculateur CA, par apprentissage des habitudes du conducteur.

Mais cela n'est pas obligatoire. Les moyens de contrôle MCT pourraient en effet également estimer la première température pendant certaines phases de chauffage de l'habitacle H, c'est-à-dire lorsque le véhicule VA est occupé, sous réserve que l'éventuel évaporateur EV ne soit pas en cours d'utilisation et n'ait pas été utilisé dans les instants précédents.

On notera également, comme illustré non limitativement sur l'unique figure, que les moyens de contrôle MCT peuvent être agencés pour ordonner des placements des volets d'alimentation V3 à V5 dans des positions respectives qui sont propres à permettre l'alimentation exclusive en air traité (ici seulement réchauffé) des bouches de distribution S1 qui sont dédiées au dégivrage.

La diffusion de l'air traité par les seules bouches de dégivrage S1 (flèche F2) est actuellement préférée, car elle se fait dans la zone qui est la plus éloignée de celle où est aspiré l'air recyclé qui alimente le pulseur PU (flèche F1), à savoir l'une au moins des caves à pieds des passagers avant du véhicule VA. On évite donc ainsi de ré-aspirer dans l'installation IC de l'air qu'elle vient tout juste de traiter et de réinjecter dans l'habitacle H (flèche F2) et dont la température serait sensiblement plus élevée que dans le reste de l'habitacle H. En outre, cette diffusion sélective permet d'assurer un dégivrage partiel du pare-brise propre à permettre au conducteur d'utiliser plus rapidement son véhicule VA.

Mais on pourrait utiliser d'autres bouches de diffusion en complément de celles (S1) qui sont dédiées au dégivrage ou à la place de ces dernières (S1), et notamment celles (S2) qui sont dédiées à l'aération centrale et/ou celles (S4) qui sont dédiées à l'aération des passagers arrières (bouches de pieds arrière).

Grâce à un contrôle des volets de l'installation, on peut désormais estimer assez précisément la température dans l'habitacle en utilisant les mesures effectuées par un capteur qui est déjà présent dans cette installation. On évite ainsi d'utiliser soit un capteur de température additionnel dans l'habitacle, soit un capteur de température d'air traité additionnel dans l'installation en association avec la réalisation de bilans énergétiques contraignants en termes de consommation d'énergie et de durée de vie de composants électroniques.

## Revendications

1. Dispositif (D) d'estimation d'une première température dans une enceinte (H) alimentée en air traité par une installation de chauffage/ climatisation (IC) comprenant un volet d'alimentation (V1) propre à contrôler son alimentation en air extérieur et/ou en air recyclé issu de ladite enceinte (H), des moyens de chauffage (MC) propres à réchauffer de l'air pour alimenter une chambre de mixage (CM) destinée à alimenter en air traité des bouches de distribution de ladite enceinte (H), un volet de mixage (V2) propre à contrôler la répartition de l'air fourni par ledit volet d'alimentation (V1) entre ladite chambre de mixage (CM) et lesdits moyens de chauffage (MC), et un capteur de température (CT) propre à mesurer une seconde température de l'air, ledit dispositif comprenant des moyens de contrôle (MCT) agencés pour ordonner des placements dudit volet d'alimentation (V1) et dudit volet de mixage (V2) dans des positions dans lesquelles ils alimentent respectivement ladite installation (IC) en air exclusivement recyclé et lesdits moyens de chauffage (MC) avec l'intégralité de cet air recyclé, puis pour estimer ladite première température à partir de ladite seconde température mesurée consécutivement auxdits placements ledit dispositif étant **caractérisé en ce que** le capteur de température (CT) propre à mesurer une seconde température de l'air est disposé en amont desdits moyens de chauffage (MC), et **en ce que** l'estimation de ladite première température se fait pendant une phase de préchauffage de ladite enceinte (H).

2. Dispositif selon la revendication 1, **caractérisé en ce que** lesdits moyens de contrôle (MCT) sont agencés pour assimiler ladite première température à ladite seconde température mesurée consécutivement auxdits placements.

3. Dispositif selon la revendication 1, **caractérisé en ce que** lesdits moyens de contrôle (MCT) sont agencés pour estimer ladite première température en effectuant une soustraction entre ladite seconde température, mesurée consécutivement auxdits placements, et une valeur choisie.

4. Dispositif selon la revendication 3, **caractérisé en ce que** lesdits moyens de contrôle (MCT) sont agencés pour choisir ladite valeur en fonction d'une troisième température d'un air régnant à l'extérieur de ladite enceinte (H).

5. Dispositif selon la revendication 3, **caractérisé en ce que** lesdits moyens de contrôle (MCT) sont agencés pour utiliser une valeur choisie prédéfinie.

6. Dispositif selon l'une des revendications 1 à 5, **caractérisé en ce que** lesdits moyens de contrôle (MCT) sont agencés pour ordonner des placements de volets d'alimentation (V3-V5) de ladite installation (IC) dans des positions respectives permettant l'alimentation exclusive de bouches de distribution (S1) dédiées au dégivrage.

7. Calculateur (CA) pour une installation de chauffage/climatisation (IC) devant alimenter une enceinte (H) en air traité, **caractérisé en ce qu'**il comprend un dispositif d'estimation (D) selon l'une des revendications précédentes.

8. Installation de chauffage/climatisation (IC), propre à alimenter en air traité une enceinte (H) et comprenant un volet d'alimentation (V1) propre à contrôler son alimentation en air extérieur et/ou en air recyclé issu de ladite enceinte (H), des moyens de chauffage (MC) propres à réchauffer de l'air pour alimenter une chambre de mixage (CM) destinée à alimenter en air traité des bouches de distribution de ladite enceinte (H), un volet de mixage (V2) propre à contrôler la répartition de l'air fourni par ledit volet d'alimentation (V1) entre ladite chambre de mixage (CM) et lesdits moyens de chauffage (MC), et un capteur de température (CT) propre à mesurer une seconde température de l'air en amont desdits moyens de chauffage (MC), **caractérisée en ce qu'**elle comprend en outre un calculateur (CA) selon la revendication 7.

9. Installation selon la revendication 8, **caractérisée en ce qu'**elle comprend en outre un évaporateur (EV) installé entre, d'une part, ledit volet d'alimentation (V1), et, d'autre part, lesdits moyens de chauffage (MC) et ledit volet de mixage (V2), et **en ce que** ledit capteur de température (CT) est propre à mesurer ladite seconde température de l'air en sortie dudit évaporateur (EV).

10. Véhicule (VA), **caractérisé en ce qu'**il comprend une installation de chauffage/climatisation (IC) selon la revendication 9.

## Patentansprüche

1. Vorrichtung (D) zum Ermitteln einer ersten Temperatur in einem Gehäuse (H), das mit Luft versorgt wird, die durch eine Heizungs-/Klimaanlage (IC) behandelt wurde, die eine Versorgungsklappe (V1) umfasst, die geeignet ist, ihre Versorgung mit Außenluft und/oder recycelter Luft, die aus dem Gehäuse (H) stammt, zu steuern, Heizmitteln (MC), die geeignet sind, Luft aufzuwärmen, um eine Mischkammer (CM) zu versorgen, die dazu bestimmt ist, Verteilungsöffnungen des Gehäuses (H) mit behandelter Luft zu versorgen, eine Mischklappe (V2), die geeignet ist, die Verteilung der gelieferten Luft durch die Versorgungsklappe (V1) zwischen der Mischkammer (CM) und den Heizmitteln (MC) zu steuern, und einen Temperatursensor (CT), der geeignet ist, eine zweite Temperatur der Luft zu messen, wobei die Vorrichtung Steuermittel (MCT) umfasst, die eingerichtet sind, um Platzierungen der Versorgungsklappe (V1) und der Mischklappe (V2) in Positionen vorzugeben, in welchen sie jeweils die Anlage (IC) ausschließlich mit recycelter Luft und die Heizmittel (MC) mit der gesamten recycelten Luft versorgen, dann die erste Temperatur ausgehend von der zweiten Temperatur, die im Anschluss an die Platzierungen gemessen wird, zu ermitteln, Vorrichtung **dadurch gekennzeichnet, dass** der Luftsensor (CT), der geeignet ist, eine zweite Temperatur der Luft zu messen, stromaufwärts der Heizmittel (MC) angeordnet ist, und dass die Ermittlung der ersten Temperatur während einer Vorwärmphase des Gehäuses (H) erfolgt.

2. Vorrichtung nach Anspruch 1, **dadurch gekennzeichnet, dass** die Steuermittel (MCT) eingerichtet sind, um die erste Temperatur mit der zweiten im Anschluss an die Platzierungen gemessene Temperatur zu assimilieren.

3. Vorrichtung nach Anspruch 1, **dadurch gekennzeichnet, dass** die Steuermittel (MCT) eingerichtet sind, um die erste Temperatur zu ermitteln, indem eine Subtraktion zwischen der zweiten Temperatur, die im Anschluss an die Platzierungen gemessen wird, und einem ausgewählten Wert ausgeführt wird.

4. Vorrichtung nach Anspruch 3, **dadurch gekennzeichnet, dass** die Steuermittel (MCT) eingerichtet sind, um den Wert in Abhängigkeit von einer dritten Temperatur einer Luft, die außerhalb des Gehäuses (H) herrscht, auszuwählen.

5. Vorrichtung nach Anspruch 3, **dadurch gekennzeichnet, dass** die Steuermittel (MCT) eingerichtet sind, um einen vordefinierten ausgewählten Wert zu verwenden.

6. Vorrichtung nach einem der Ansprüche 1 bis 5, **dadurch gekennzeichnet, dass** die Steuermittel (MCT) eingerichtet sind, um Platzierungen von Versorgungsklappen (V3-V5) der Anlage (IC) in jeweiligen Positionen vorzugeben, die die ausschließliche Versorgung von Verteilungsöffnungen (S1), die dem Enteisen gewidmet sind, erlauben.

7. Rechner (CA) für eine Heizungs-/Klimaanlage (IC), die ein Gehäuse (H) mit behandelter Luft versorgen soll, **dadurch gekennzeichnet, dass** er eine Ermittlungsvorrichtung (D) nach einem der vorhergehenden Ansprüche umfasst.

8. Heizungs-/Klimaanlage (IC), die geeignet ist, ein Gehäuse (H) mit behandelter Luft zu versorgen und eine Versorgungsklappe (V1) umfasst, die geeignet ist, ihre Versorgung mit Außenluft und/oder recycelter Luft, die aus dem Gehäuse (H) stammt, zu steuern, Heizmittel (MC), die geeignet sind, Luft aufzuwärmen, um eine Mischkammer (CM), die dazu bestimmt ist, Verteilungsöffnungen des Gehäuses (H) mit behandelter Luft zu versorgen, zu versorgen, eine Mischklappe (V2), die geeignet ist, die Verteilung der von der Versorgungsklappe (V1) gelieferten Luft zwischen der Mischkammer (CM) und den Heizmitteln (MC) zu steuern, und einen Temperatursensor (CT), der geeignet ist, eine zweite Temperatur der Luft stromaufwärts der Heizmittel (MC) zu messen, **dadurch gekennzeichnet, dass** sie außerdem einen Rechner (CA) nach Anspruch 7 umfasst.

9. Anlage nach Anspruch 8, **dadurch gekennzeichnet, dass** sie außerdem einen Verdampfer (EV) umfasst, der zwischen einerseits der Versorgungsklappe (V1) und andererseits den Heizmitteln (MC) und der Mischklappe (V2) installiert ist, und dass der Temperatursensor (CT) geeignet ist, die zweite Temperatur der Luft am Ausgang des Verdampfers (EV) zu messen.

10. Fahrzeug (VA), **dadurch gekennzeichnet, dass** es eine Heizungs-/Klimaanlage (IC) nach Anspruch 9 umfasst.

## Claims

1. A device (D) for estimating a first temperature in an enclosed space (H) fed with air treated by a heating/air conditioning installation (IC) including a feed flap (V1) suitable for controlling its supply of exterior air and/or of recirculated air issuing from the said enclosed space (H), heating means (MC) suitable for reheating air for feeding a mixing chamber (CM) intended to feed with treated air distribution ports of the said enclosed space (H), a mixing flap (V2) suitable for controlling the distribution of the air supplied by the said feed flap (V1) between the said mixing chamber (CM) and the said heating means (MC), and a temperature sensor (CT) suitable for measuring a second temperature of the air, the said device including control means (MCT) arranged to order placements of the said feed flap (V1) and of the said mixing flap (V2) in positions in which they feed respectively the said installation (IC) with exclusively recirculated air and the said heating means (MC) with all of this recirculated air, then to estimate the said first temperature from the said second temperature measured following the said placements, the said device being **characterized in that** the temperature sensor (CT) suitable for measuring a second temperature of the air is disposed upstream of the said heating means (MC), and **in that** the estimation of the said first temperature is carried out during a pre-heating phase of the said enclosed space (H).

2. The device according to Claim 1, **characterized in that** the said control means (MCT) are arranged to assimilate the said first temperature to the said second temperature, measured following the said placements.

3. The device according to Claim 1, **characterized in that** the said control means (MCT) are arranged for estimating the said first temperature by carrying out a subtraction between the said second temperature, measured following the said placements, and a selected value.

4. The device according to Claim 3, **characterized in that** the said control means (MCT) are arranged to select the said value as a function of a third temperature of an air prevailing at the exterior of the said enclosed space (H).

5. The device according to Claim 3, **characterized in that** the said control means (MCT) are arranged to use a predefined selected value.

6. The device according to one of Claims 1 to 5, **characterized in that** the said control means (MCT) are arranged to order placements of feed flaps (V3-V5) of the said installation (IC) in respective positions permitting the exclusive feeding of distribution ports (S1) dedicated to de-icing.

7. A computer (CA) for a heating/air conditioning installation (IC) for feeding an enclosed space (H) with treated air, **characterized in that** it includes an estimating device (D) according to one of the preceding claims.

8. A heating/air conditioning installation (IC), suitable for feeding with treated air an enclosed space (H) and including a feed flap (V1) suitable for controlling its feeding with exterior air and/or with recirculated air issued from the said enclosed space (H), heating means (MC) suitable for reheating air for feeding a mixing chamber (CM) intended for feeding with treated air distribution ports of the said enclosed space (H), a mixing flap (V2) suitable for controlling the distribution of the air supplied by the said feed flap (V1) between the said mixing chamber (CM) and the said heating means (MC), and a temperature sensor (CT) suitable for measuring a second temperature of the air upstream of the said heating means (MC), **characterized in that** it further includes a computer (CA) according to Claim 7.

9. The installation according to Claim 8, **characterized in that** it further includes an evaporator (EV) installed between, on the one hand, the said feed flap (V1), and, on the other hand, the said heating means (MC) and the said mixing flap (V2), and **in that** the said temperature sensor (CT) is suitable for measuring the said second temperature of the air at the outlet of the said evaporator (EV).

10. A vehicle (VA), **characterized in that** it includes a heating/air conditioning installation (IC) according to Claim 9.
